# EUROPEAN PATENT SPECIFICATION

(11) **EP 2 874 465 B1**
(45) Date of publication and mention of the grant of the patent: **05.12.2018**
(21) Application number: 14150043.9
(22) Date of filing: 02.01.2014
(51) Int. Cl.: H04W 88/04, H04L 29/08, H04W 4/00

(54) **Method and system for remote equipment data installation**
Verfahren und System zur ferngesteuerten Ausrüstungsdateninstallation
Procédé et système d'installation de données d'équipement à distance

(30) Priority: 18.11.2013 TW 102141927; 18.11.2013 TW 102221514
(43) Date of publication of application: 20.05.2015
(73) Proprietor: Lite-On Technology Corporation, Taipei City 11494 (TW)
(72) Inventor: Chang, Ping-Kuang, 11494 Taipei (TW)
(74) Representative: Zimmermann, Tankred Klaus

(56) References cited:
- WO-A2-2005/036325
- US-A1- 2006 065 733
- US-A1- 2013 098 986

## Description

The invention relates to equipment data installation, and more particularly to a method and system for remote equipment data installation.

The increasing popularity of electric vehicles has resulted in an increase in public electrical outlets to charge the electric vehicles. Therefore, it is inevitable to install a large number of charging equipments.

Typically, for initial data installation of a new charging equipment placed at a desired location, a notebook computer is used to connect with the charging equipment, and is operable to transmit connection data wiredly, which is associated with connection between the charging equipment and an equipment management server located remotely with respect to the charging equipment, such as web address and port number of the equipment management server, to the charging equipment. Thereafter, when the charging equipment establishes a communication link with the equipment management server over a communication network, such as the Internet, based on the connection data, the equipment management server transmits installation data, which is associated with operation of the charging equipment, to the charging equipment through the communication link. For example, the installation data may include parameter data and firmware data, which are associated with operation of the charging equipment. Further, the equipment management server is operable to convert a geographical address corresponding to the location of the charging equipment into global positioning system (GPS) location data.

However, in such data installation, the connection data must be correctly inputted to the notebook computer by manual operation, and then, the installation data needs to be transmitted by the equipment management server to the charging equipment via the communication network. Therefore, for a mass of charging equipments to be data installed, manual input of the connection data is time-consuming, and data transmission loading of the equipment management server is increased. Furthermore, the GPS location data may not exactly represent the location of the charging equipment. Therefore, there is still room for improvement.

WO 2005/036325 A2 discloses a system for using an RFID tag to automatically setup and configure a universal remote control to command appliances of various types and various manufacturers.

US 2006/065733 A1 discloses a system for providing a mobile service with the use of a code pattern. A photograph of a code pattern image is taken, the photographed code pattern image is decoded so as to obtain code information, a uniform resource locator (URL) information corresponding to the code information is extracted, a content information request message is transmitted to a service provider server corresponding to the URL information, and content information corresponding to the URL information are received from the service provider server. Thus, it is possible to provide various and convenient mobile services to mobile terminal users using a mobile terminal, having a camera, and a code pattern containing the URL information.

Other features and advantages of the present invention will become apparent in the following detailed description of the preferred embodiments with reference to the accompanying drawings, of which:
Figure 1 is a schematic block diagram illustrating the first preferred embodiment of a system for data installation according to the present invention;
Figure 2 is a schematic block diagram illustrating a remote equipment and a mobile device of the system of the first preferred embodiment;
Figure 3 is a flow chart illustrating the preferred embodiment of a method for data installation according to the present invention implemented by the system of the first preferred embodiment; and
Figure 4 is a schematic block diagram illustrating an example of a system for data installation.

Before the present invention is described in greater detail, it should be noted that like elements are denoted by the same reference numerals throughout the disclosure.

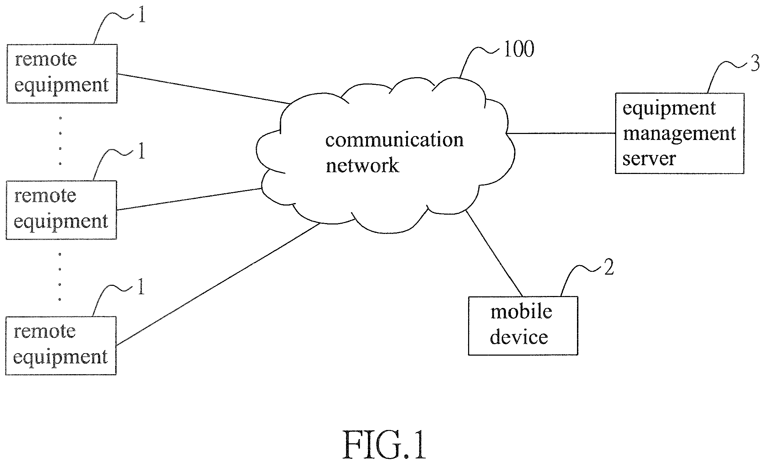

Referring to Figure 1, the first preferred embodiment of a system for data installation according to the present invention is shown to include a plurality of remote equipments 1, a mobile device 2 and an equipment management server 3.

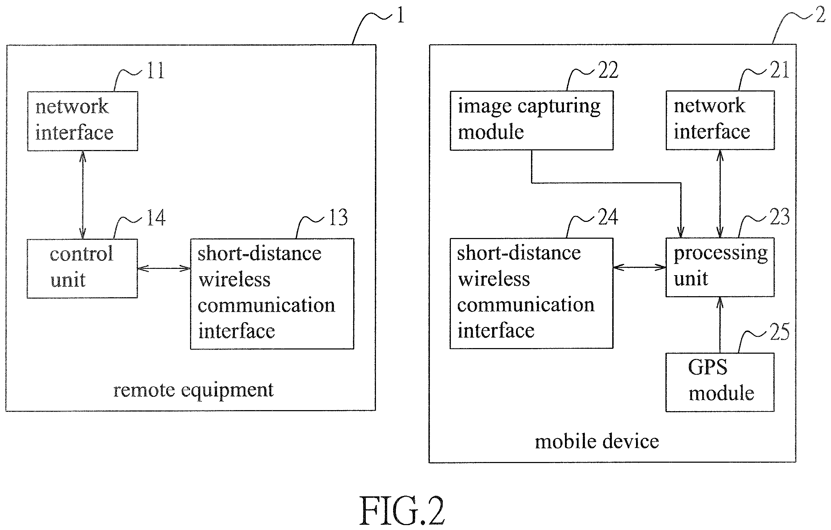

The remote equipments 1 may, for example, be charging equipments disposed in the same charging station. Each remote equipment 1 is provided with a unique identification code. In this embodiment, the unique identification code of each remote equipment 1 is in the form of a two-dimensional bar code pattern (not shown), such as a QR code pattern, disposed on the remote equipment 1. Referring further to Figure 2, each remote equipment 1 includes a network interface 11 connected to a communication network 100, such as the Internet, a short-distance wireless communication interface 13, and a control unit 14 coupled to the network interface 11 and the short-distance wireless communication interface 13.

The equipment management server 3 is located remotely with respect to the remote equipments 1, is connected to the communication network 100, and pre-stores a plurality of installation data, each of which corresponds to the unique identification code of a respective remote equipment 1 and is associated with data installation of the respective remote equipment 1. In this embodiment, initially, each of the plurality of installation data includes connection data that is associated with connection between the respective remote equipment 1 and the equipment management server 3, and parameter data and firmware data that are associated with operation of the respective remote equipment 1.

The mobile device 2 may, for example, be a smart phone, a tablet computer or a mobile communication device. Referring again to Figure 2, in this embodiment, the mobile device 2 includes a network interface 21 connected to the communication network 100 (see Figure 1), an image capturing module 22, a short-distance wireless communication interface 24, a global positioning system (GPS) module 25, and a processing unit 23 coupled to the network interface 21, the image capturing module 22, the short-distance wireless communication interface 24 and the GPS module 25. The mobile device 2 is capable of wireless communication with each remote equipment 1 when in close proximity thereto. It is noted that the short-distance wireless communication interface 13 of each remote equipment 1 and the short-distance wireless communication interface 24 of the mobile device 2 may use near field communication (NFC), Bluetooth, wireless fidelity (Wi-Fi) or infrared data association (IrDA) technology.

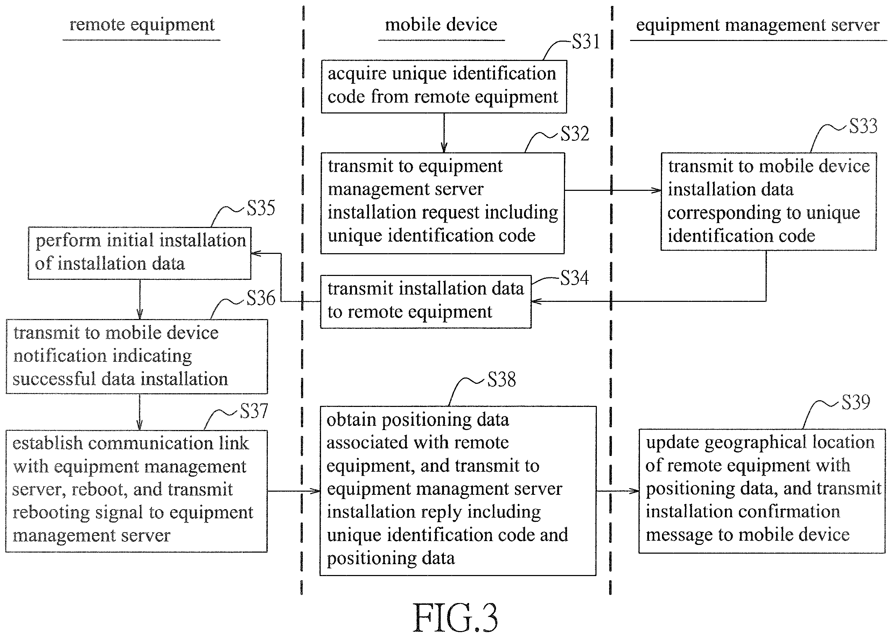

Figure 3 is a flow chart illustrating how the system of Figure 1 implements the preferred embodiment of a method for data installation according to the present invention.

In step S31, the mobile device 2 acquires the unique identification code from one remote equipment 1. In this embodiment, the image capturing module 22 of the mobile device 2 captures an image of the two-dimensional bar code pattern, and outputs the captured image to the processing unit 23. Then, the processing unit 23 processes the captured image in a known manner so as to obtain the unique identification code.

In step S32, when the mobile device 2 establishes a communication link with the equipment management server 3 using the network interface 21, the mobile device 2 transmits an installation request including the unique identification code to the equipment management server 3 through the communication link.

In step S33, upon receipt of the installation request from the mobile device 3, the equipment management server 3 transmits to the mobile device 2 the installation data corresponding to the unique identification code through the communication link.

In step S34, when the mobile device 2 is in close proximity to the remote equipment 1 to establish a short-distance wireless communication link with the remote equipment 1 using the short-distance wireless communication interfaces 24, 13, the mobile device 2 transmits the installation data to the remote equipment 1. In this embodiment, the remote equipment 1 first transmits a data request to the mobile device 2 through the short-distance wireless communication link, and the mobile device 2 transmits the installation data to the remote equipment 1 in response to the data request from the remote equipment 1.

In step S35, upon receipt of the installation data from the mobile device 2, the remote equipment 1 performs initial installation of the installation data.

In step S36, when installation of the installation data is successful, the remote equipment 1 is operable to transmit a notification indicating successful data installation to the mobile device 2 through the short-distance wireless communication link.

In step S37, the remote equipment 1 is operable to establish a communication link with the equipment management server 3 over the communication network 100 based on the connection data of the installation data, to reboot based on the parameter data and the firmware data of the installation data, and to transmit a rebooting signal to the equipment management server 3.

In step S38, when the mobile device 2 receives the notification transmitted from the remote equipment 1 in step S36, the mobile device 2 is preferably moved as close as possible to the remote equipment 1. At the same time, the GPS module 25 of the mobile device 2 is operable to obtain positioning data associated with the remote equipment 1 by acquiring the location of the mobile device 2 in close proximity to the remote equipment 1. Then, the mobile device 2 is operable to transmit to the equipment management server 3 an installation reply that includes the positioning data and the unique identification code of the remote equipment 1.

In step S39, when the equipment management server 3 receives the rebooting signal from the remote equipment 1 and the installation reply from the mobile device 2, the equipment management server 3 is operable to update a geographical location of the remote equipment 1 with the positioning data, and to transmit an installation confirmation message to the mobile device 2. Thereafter, upon receipt of the installation confirmation message from the equipment management server 3, the mobile device 2 can proceed to perform initial data installation for another remote equipment 1 in the same manner.

In such a configuration, due to the presence of the mobile device 2, the installation data for each remote equipment 1, including the connection data, the parameter data and the firmware data, can be correctly and easily transmitted to the remote equipment 1 using short-distance wireless communication without manual input and connection operations. In addition, the equipment management server 3 can effectively confirm initial data installation for each remote equipment 1. Further, the equipment manage server 3 can obtain relatively accurate location data of each remote equipment 1 compared to the prior art. Alternatively, it is noted that the mobile device 2 can also obtain the plurality of installation data corresponding respectively to the identification codes of all the remote equipments 1 at the outset. Then, steps S31 and S34∼S39 are performed repeatedly. In this way, transmission loading on the communication network 100 for the installation data for all the remote equipments 1 is reduced.

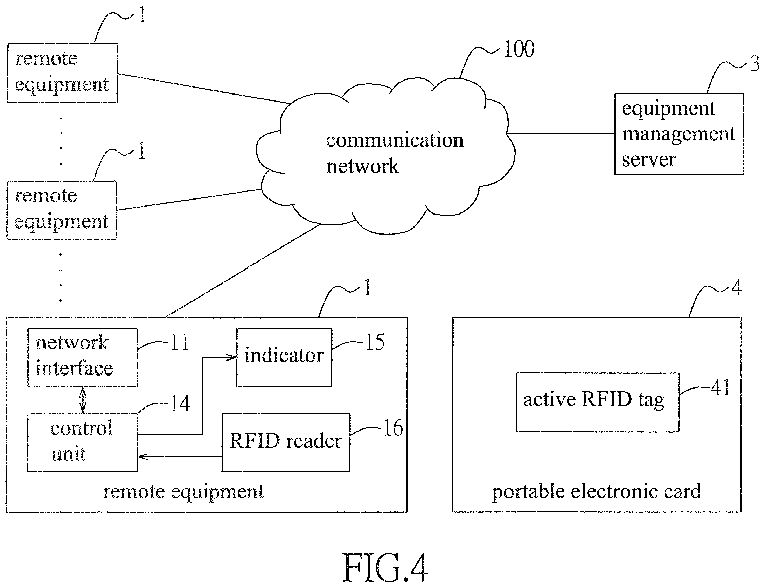

Figure 4 illustrates an example of a system for data installation, which is a modification of the first preferred embodiment. In this example, a portable electronic card 4 is used to replace the mobile device 2 of the first preferred embodiment (Figure 1). The portable electronic card 4 includes an embedded active radio frequency identification (RFID) tag 41.

Initially, the equipment management server 3 is operable to write the plurality of installation data corresponding respectively to the identification codes of the remote equipments 1 into the active RFID tag 41. Thus, the plurality of installation data is stored in the portable electronic card 4.

In additional, each remote equipment 1 further includes an RFID reader 16 and an indicator 15 coupled to the control unit 14.

When the portable electronic card 4 is in close proximity to one remote equipment 1 to establish a short-distance wireless communication link therewith, the RFID reader 16 of the remote equipment 1 transmits a data request including the unique identification code to the portable electronic card 4, and the portable electronic card 4 transmits the installation data corresponding to the unique identification code to the remote equipment 1 in response to the data request from the remote equipment 1, i.e., the RFID reader 16 reads the installation data from the active RFID tag 41 of the portable electronic card 4. Thereafter, the remote equipment 1 performs initial installation of the installation data. When installation of the installation data is successful, the control unit 14 of the remote equipment 1 is operable to enable the indicator 15 to generate an indicating output, e.g., a light or sound output. Similarly, the remote equipment 1 is operable to reboot based on the parameter data and the firmware data of the installation data and to transmit a rebooting signal to the equipment management server 3 when a communication link between the remote equipment 1 and the equipment management server 3 over the communication network 100 is established based on the connection data of the installation data.

In such a configuration, each of the plurality of installation data can be correctly and easily transmitted to a respective remote equipment 1 using RFID technology without manual input and connection operations. Similarly, transmission loading on the communication network 100 for the installation data for all the remote equipments 1 is reduced.

## Claims

1. A system for data installation comprising:
a remote equipment (1) provided with a unique identification code;
an equipment management server (3) located remotely with respect to said remote equipment (1), connected to a communication network (100) and pre-storing installation data that corresponds to the unique identification code and that is associated with data installation of said remote equipment (1); and
a mobile device (2) connected to the communication network (100) and capable of short-distance wireless communication with said remote equipment (1), said mobile device (2) being operable to acquire the unique identification code from said remote equipment (1), wherein said mobile device (2) is configured to transmit, upon establishing a communication link between said mobile device (2) and said equipment management server (3) over the communication network (100), an installation request including the unique identification code to said equipment management server (3), and said equipment management server (3) is configured to transmit the installation data to said mobile device (2) in response to the installation request from said mobile device (2); and wherein said mobile device (2) is configured to transmit, upon establishing a short-distance wireless communication link between said mobile device (2) and said remote equipment (1), the installation data to said remote equipment (1) through the short-distance wireless communication link such that said remote equipment (1) performs initial installation of the installation data,
**characterized in that** the installation data includes connection data that is associated with connection between said remote equipment (1) and said equipment management server (3), and parameter data and firmware data that are associated with operation of said remote equipment (1),
wherein, when installation of the installation data is successful, said remote equipment (1) is operable to transmit a notification indicating successful data installation to said mobile device (2) through the short-distance wireless communication link, to reboot based on the parameter data and the firmware data of the installation data, and to transmit a rebooting signal to said equipment management server (3) when a communication link between said remote equipment (1) and said equipment management server (3) over the communication network (100) is established based on the connection data of the installation data,
wherein said mobile device (2) further includes a global positioning system (GPS) module (25) that is operable to obtain positioning data associated with said remote equipment (1) by acquiring location of saidmobile device (2) in close proximity to said remote equipment (1) upon receipt of the notification from said remote equipment (1), and is operable to transmit to said equipment management server (3) an installation reply that includes the positioning data and the unique identification code of said remote equipment (1); and
upon receipt of the rebooting signal from said remote equipment (1) and the installation reply from said mobile device (2), said equipment management server (3) is operable to update a geographical location of said remote equipment (1) with the positioning data, and to transmit an installation confirmation message to said mobile device (2) via the communication network (100).

2. The system as claimed in Claim 1, **characterized in that**:
the unique identification code is in the form of a two-dimensional bar code pattern disposed on said remote equipment (1); and
said mobile device (2) includes an image capturing module (22) for capturing an image of said two-dimensional bar code pattern, and a processing unit (23) coupled to said image capturing module (22) for receiving the captured image therefrom and operable to process the captured image so as to obtain the unique identification code.

3. The system as claimed in Claim 1, **characterized in that**, when said mobile device (2) is in close proximity to said remote equipment (1) to establish the short-distance wireless communication link therewith, said remote equipment (1) is operable to transmit a data request to said mobile device (2) through the short-distance wireless communication link, and said mobile device (2) transmits the installation data to said remote equipment (1) in response to the data request received thereby.

4. A method for data installation implemented by a system that includes a remote equipment (1) provided with a unique identification code, an equipment management server (3) located remotely with respect to the remote equipment (1), and a mobile device (2), said method comprising the steps of:
a) the mobile device (2) acquiring the unique identification code from the remote equipment (1);
b) upon establishing a communication link between the mobile device (2) and the equipment management server (3), the mobile device (2) transmitting an installation request that includes the unique identification code to the equipment management server (3);
c) upon receipt of the installation request from the mobile device (2), the equipment management server (3) transmitting to the mobile device (2) installation data that is pre-stored therein, that corresponds to the unique identification code and that is associated with data installation of the remote equipment (1); and
d) upon establishing a short-distance wireless communication link between the mobile device (2) and the remote equipment (1), the mobile device (2) transmitting the installation data to the remote equipment (1) such that the remote equipment (1) performs initial installation of the installation data, **characterized in that** the installation data includes the connection data that is associated with connection between the remote equipment (1) and the equipment management server (3), and parameter data and firmware data that are associated with operation of the remote equipment (1),
wherein the method is further **characterized by** the steps of:
e) when installation of the installation data is successful, the remote equipment (1) transmitting a notification that indicates successful data installation to the mobile device (2) through the short-distance wireless communication link;
f) the remote equipment (1) establishing the communication link with the equipment management server (3) over the communication network (100) based on the connection data of the installation data, and transmitting a rebooting signal to the equipment management server (3) after rebooting based on the parameter data and the firmware data of the installation data;
g) upon receipt of the notification transmitted from the remote equipment (1) in step e), the mobile device (2) obtaining positioning data that is associated with the remote equipment (1) using global positioning system (GPS) technology, and transmitting to the equipment management server (3) an installation reply that includes the positioning data and the unique identification code of the remote equipment (1); and
h) upon receipt of the rebooting signal transmitted from the remote equipment (1) in step f) and the installation reply transmitted from the mobile device (2) in step g), the equipment management server (3) updating a geographical location of the remote equipment (1) with the positioning data, and transmitting an installation confirmation message to the mobile device (2) .

5. The method as claimed in Claim 4, the unique identification code being in the form of a two-dimensional bar code pattern disposed on the remote equipment (1), said method being **characterized in that** step a) includes the sub-steps of:
a1) the mobile device (2) capturing an image of the two-dimensional bar code pattern; and
a2) the mobile device (2) processing the captured image so as to obtain the unique identification code.

6. The method as claimed in any one of Claims 4 and 5, **characterized in that**, in step d), the remote equipment (1) first transmits a data request to the mobile device (2) through the short-distance wireless communication link, and the mobile device (2) transmits the installation data to the remote equipment (1) in response to the data request from the remote equipment (1).

## Patentansprüche

1. Ein System zur Dateninstallation, das folgende Merkmale aufweist:
eine entfernte Ausrüstung (1), die mit einem eindeutigen Identifikationscode versehen ist;
einen Ausrüstungsverwaltungsserver (3), der sich entfernt von der entfernten Ausrüstung (1) befindet, der mit einem Kommunikationsnetz (100) verbunden ist und Installationsdaten vorspeichert, die dem eindeutigen Identifikationscode entsprechen und die einer Dateninstallation der entfernten Ausrüstung (1) zugeordnet sind; und
eine mobile Vorrichtung (2), die mit dem Kommunikationsnetz (100) verbunden ist und zu einer drahtlosen Kurzdistanz-Kommunikation mit der entfernten Ausrüstung (1) fähig ist, wobei die mobile Vorrichtung (2) betreibbar ist, um den eindeutigen Identifikationscode von der entfernten Ausrüstung (1) zu erhalten, wobei die mobile Vorrichtung (2) ausgebildet ist, um auf das Einrichten einer Kommunikationsverbindung zwischen der mobilen Vorrichtung (2) und dem Ausrüstungsverwaltungsserver (3) über das Kommunikationsnetz (100) hin eine Installationsanfrage, die den eindeutigen Identifikationscode beinhaltet, an den Ausrüstungsverwaltungsserver (3) zu übertragen, und der Ausrüstungsverwaltungsserver (3) ausgebildet ist, um die Installationsdaten ansprechend auf die Installationsanfrage von der mobilen Vorrichtung (2) an die mobile Vorrichtung (2) zu übertragen; und wobei die mobile Vorrichtung (2) ausgebildet ist, um auf das Einrichten einer drahtlosen Kurzdistanz-Kommunikationsverbindung zwischen der mobilen Vorrichtung (2) und der entfernten Ausrüstung (1) hin die Installationsdaten durch die drahtlose Kurzdistanz-Kommunikationsverbindung derart an die entfernte Ausrüstung (1) zu übertragen, dass die entfernte Ausrüstung (1) eine anfängliche Installation der Installationsdaten durchführt,
**dadurch gekennzeichnet, dass** die Installationsdaten Verbindungsdaten, die einer Verbindung zwischen der entfernten Ausrüstung (1) und dem Ausrüstungsverwaltungsserver (3) zugeordnet sind, und Parameterdaten und Firmware-Daten aufweisen, die einem Betrieb der entfernten Ausrüstung (1) zugeordnet sind,
wobei, wenn eine Installation der Installationsdaten erfolgreich ist, die entfernte Ausrüstung (1) betreibbar ist, um eine Benachrichtigung, die eine erfolgreiche Dateninstallation anzeigt, durch die drahtlose Kurzdistanz-Kommunikationsverbindung an die mobile Vorrichtung (2) zu übertragen, basierend auf den Parameterdaten und den Firmware-Daten der Installationsdaten neu zu starten und ein Neustart-Signal an den Ausrüstungsverwaltungsserver (3) zu übertragen, wenn eine Kommunikationsverbindung zwischen der entfernten Ausrüstung (1) und dem Ausrüstungsverwaltungsserver (3) über das Kommunikationsnetz (100) basierend auf den Verbindungsdaten der Installationsdaten eingerichtet wird,
wobei die mobile Vorrichtung (2) ferner ein Globalpositionierungssystem(GPS)-Modul (25) aufweist, das betreibbar ist, um Positionierungsdaten, die der entfernten Ausrüstung (1) zugeordnet sind, zu erhalten durch Erfassen eines Orts der mobilen Vorrichtung (2) in enger Nähe zu der entfernten Ausrüstung (1) auf einen Empfang der Benachrichtigung von der entfernten Ausrüstung (1) hin, und betreibbar ist, um an den Ausrüstungsverwaltungsserver (3) eine Installationsantwort zu übertragen, die die Positionierungsdaten und den eindeutigen Identifikationscode der entfernten Ausrüstung (1) aufweist; und
auf einen Empfang des Neustart-Signals von der entfernten Ausrüstung (1) und der Installationsantwort von der mobilen Vorrichtung (2) hin der Ausrüstungsverwaltungsserver (3) betreibbar ist, um einen geografischen Ort der entfernten Ausrüstung (1) mit den Positionierungsdaten zu aktualisieren und eine Installationsbestätigungsnachricht über das Kommunikationsnetz (100) an die mobile Vorrichtung (2) zu übertragen.

2. Das System gemäß Anspruch 1, das **dadurch gekennzeichnet ist, dass**:
der eindeutige Identifikationscode in der Form einer zweidimensionalen Strichcode-Struktur vorliegt, die an der entfernten Ausrüstung (1) angeordnet ist; und
die mobile Vorrichtung (2) ein Bilderfassungsmodul (22) zum Erfassen eines Bilds der zweidimensionalen Strichcode-Struktur und eine Verarbeitungseinheit (23), die mit dem Bilderfassungsmodul (22) gekoppelt ist, zum Empfangen des erfassten Bilds von demselben aufweist, die betreibbar ist, um das erfasste Bild zu verarbeiten, um den eindeutigen Identifikationscode zu erhalten.

3. Das System gemäß Anspruch 1, das **dadurch gekennzeichnet ist, dass**, wenn sich die mobile Vorrichtung (2) in enger Nähe zu der entfernten Ausrüstung (1) befindet, um die drahtlose Kurzdistanz-Kommunikationsverbindung mit derselben einzurichten, die entfernte Ausrüstung (1) betreibbar ist, um eine Datenanfrage durch die drahtlose Kurzdistanz-Kommunikationsverbindung an die mobile Vorrichtung (2) zu übertragen, und die mobile Vorrichtung (2) die Installationsdaten ansprechend auf die Datenanfrage, die durch dieselbe empfangen wird, an die entfernte Ausrüstung (1) überträgt.

4. Ein Verfahren zur Dateninstallation, das implementiert wird durch ein System, das eine entfernte Ausrüstung (1), die mit einem eindeutigen Identifikationscode versehen ist, einen Ausrüstungsverwaltungsserver (3), der in Bezug auf die entfernte Ausrüstung (1) entfernt angeordnet ist, und eine mobile Vorrichtung (2) aufweist, wobei das Verfahren folgende Schritte aufweist:
a) die mobile Vorrichtung (2) erhält den eindeutigen Identifikationscode von der entfernten Ausrüstung (1);
b) auf ein Einrichten einer Kommunikationsverbindung zwischen der mobilen Vorrichtung (2) und dem Ausrüstungsverwaltungsserver (3) hin überträgt die mobile Vorrichtung (2) eine Installationsanfrage, die den eindeutigen Identifikationscode aufweist, an den Ausrüstungsverwaltungsserver (3);
c) auf einen Empfang der Installationsanfrage von der mobilen Vorrichtung (2) hin überträgt der Ausrüstungsverwaltungsserver (3) Installationsdaten, die in demselben vorgespeichert sind, die dem eindeutigen Identifikationscode entsprechen und die einer Dateninstallation der entfernten Ausrüstung (1) zugeordnet sind, an die mobile Vorrichtung (2); und
d) auf ein Einrichten einer drahtlosen Kurzdistanz-Kommunikationsverbindung zwischen der mobilen Vorrichtung (2) und der entfernten Ausrüstung (1) hin überträgt die mobile Vorrichtung (2) die Installationsdaten derart an die entfernte Ausrüstung (1), dass die entfernte Ausrüstung (1) eine anfängliche Installation der Installationsdaten durchführt,
**dadurch gekennzeichnet, dass** die Installationsdaten die Verbindungsdaten, die einer Verbindung zwischen der entfernten Ausrüstung (1) und dem Ausrüstungsverwaltungsserver (3) zugeordnet sind, und Parameterdaten und Firmware-Daten aufweisen, die einem Betrieb der entfernten Ausrüstung (1) zugeordnet sind,
wobei das Verfahren ferner durch folgende Schritte gekennzeichnet ist:
e) wenn eine Installation der Installationsdaten erfolgreich ist, überträgt die entfernte Ausrüstung (1) eine Benachrichtigung, die eine erfolgreiche Dateninstallation anzeigt, durch die drahtlose Kurzdistanz-Kommunikationsverbindung an die mobile Vorrichtung (2);
f) die entfernte Ausrüstung (1) richtet die Kommunikationsverbindung mit dem Ausrüstungsverwaltungsserver (3) über das Kommunikationsnetz (100) basierend auf den Verbindungsdaten der Installationsdaten ein und überträgt ein Neustart-Signal nach einem Neustarten basierend auf den Parameterdaten und den Firmware-Daten der Installationsdaten an den Ausrüstungsverwaltungsserver (3);
g) auf einen Empfang der Benachrichtigung, die von der entfernten Ausrüstung (1) bei Schritt e) übertragen wird, hin erhält die mobile Vorrichtung (2) Positionierungsdaten, die der entfernten Ausrüstung (1) zugeordnet sind, unter Verwendung einer Globalpositionierungssystem(GPS)-Technologie und überträgt an den Ausrüstungsverwaltungsserver (3) eine Installationsantwort, die die Positionierungsdaten und den eindeutigen Identifikationscode der entfernte Ausrüstung (1) aufweist; und
h) auf einen Empfang des Neustart-Signals, das von der entfernten Ausrüstung (1) bei Schritt f) übertragen wird, und der Installationsantwort, die von der mobilen Vorrichtung (2) bei Schritt g) übertragen wird, hin aktualisiert der Ausrüstungsverwaltungsserver (3) einen geografischen Ort der entfernten Ausrüstung (1) mit den Positionierungsdaten und überträgt eine Installationsbestätigungsnachricht an die mobile Vorrichtung (2).

5. Das Verfahren gemäß Anspruch 4, wobei der eindeutige Identifikationscode in der Form einer zweidimensionalen Strichcode-Struktur vorliegt, die an der entfernten Ausrüstung (1) angeordnet ist, wobei das Verfahren **dadurch gekennzeichnet ist, dass** Schritt a) folgende Teilschritte aufweist:
a1) die mobile Vorrichtung (2) erfasst ein Bild der zweidimensionalen Strichcode-Struktur; und
a2) die mobile Vorrichtung (2) verarbeitet das erfasste Bild, um so den eindeutigen Identifikationscode zu erhalten,

6. Das Verfahren gemäß einem der Ansprüche 4 und 5, das **dadurch gekennzeichnet ist, dass** bei Schritt d) die entfernte Ausrüstung (1) zuerst eine Datenanfrage durch die drahtlose Kurzdistanz-Kommunikationsverbindung an die mobile Vorrichtung (2) überträgt und die mobile Vorrichtung (2) die Installationsdaten ansprechend auf die Datenanfrage von der entfernten Ausrüstung (1) an die entfernte Ausrüstung (1) überträgt.

## Revendications

1. Système pour l'installation de données, comprenant:
un équipement à distance (1) pourvu d'un code d'identification unique;
un serveur de gestion d'équipement (3) situé à distance par rapport audit équipement à distance (1), connecté à un réseau de communication (100) et pré-mémorisant les données d'installation qui correspondent au code d'identification unique et qui sont associées à l'installation de données dudit équipement à distance (1); et
un dispositif mobile (2) connecté au réseau de communication (100) et à même de communiquer sans fil à courte distance avec ledit équipement à distance (1), ledit dispositif mobile (2) pouvant fonctionner pour acquérir le code d'identification unique dudit équipement à distance (1), où ledit dispositif mobile (2) est configuré pour transmettre, à l'établissement d'une liaison de communication entre ledit dispositif mobile (2) et ledit serveur de gestion d'équipement (3) par l'intermédiaire du réseau de communication (100), une demande d'installation comportant le code d'identification unique audit serveur de gestion d'équipement (3), et ledit serveur de gestion d'équipement (3) est configuré pour transmettre les données d'installation audit dispositif mobile (2) en réponse à la demande d'installation dudit dispositif mobile (2); et où ledit dispositif mobile (2) est configuré pour transmettre, à l'établissement d'une liaison de communication sans fil à courte distance entre ledit dispositif mobile (2) et ledit équipement à distance (1), les données d'installation audit équipement à distance (1) par l'intermédiaire de la liaison de communication sans fil à courte distance de sorte que ledit équipement à distance (1) effectue l'installation initiale des données d'installation,
**caractérisé par le fait que** les données d'installation comportent des données de connexion qui sont associées à la connexion entre ledit équipement à distance (1) et ledit serveur de gestion d'équipement (3), et des données de paramètre et des données de progiciel qui sont associées au fonctionnement dudit équipement à distance (1),
dans lequel, lorsque l'installation des données d'installation est réussie, ledit équipement à distance (1) peut fonctionner pour transmettre une notification indiquant que l'installation des données est réussie audit dispositif mobile (2) par l'intermédiaire de la liaison de communication sans fil à courte distance, pour redémarrer sur base des données de paramètres et les données de progiciel des données d'installation, et pour transmettre un signal de redémarrage audit serveur de gestion d'équipement (3) lorsqu'une liaison de communication entre ledit équipement à distance (1) et ledit serveur de gestion d'équipement (3) par l'intermédiaire du réseau de communication (100) est établie sur base des données de connexion des données d'installation,
dans lequel ledit dispositif mobile (2) comporte par ailleurs un module de système de positionnement global (GPS) (25) qui peut fonctionner pour obtenir des données de positionnement associées audit équipement à distance (1) en acquérant la position dudit dispositif mobile (2) à proximité immédiate dudit équipement à distance (1) à la réception de la notification dudit équipement à distance (1), et peut fonctionner pour transmettre audit serveur de gestion d'équipement (3) une réponse d'installation qui comporte les données de positionnement et le code d'identification unique dudit équipement à distance (1); et
à la réception du signal de redémarrage dudit équipement à distance (1) et de la réponse d'installation dudit dispositif mobile (2), ledit serveur de gestion d'équipement (3) peut fonctionner pour mettre à jour un emplacement géographique dudit équipement à distance (1) par les données de positionnement, et pour transmettre un message de confirmation d'installation audit dispositif mobile (2) par l'intermédiaire du réseau de communication (100).

2. Système selon la revendication 1, **caractérisé par le fait que**:
le code d'identification unique se présente sous forme d'un modèle de code-barres bidimerisionnel disposé sur ledit équipement à distance (1); et
ledit dispositif mobile (2) comporte un module de capture d'image (22) destiné à capturer une image dudit modèle de code-barres bidimensionnel, et une unité de traitement (23) couplée audit module de capture d'image (22) pour recevoir l'image capturée à partir de ce dernier et pouvant fonctionner pour traiter l'image capturée de manière à obtenir le code d'identification unique.

3. Système selon la revendication 1, **caractérisé par le fait que**, lorsque ledit dispositif mobile (2) se trouve à proximité immédiate dudit équipement à distance (1) pour établir la liaison de communication sans fil à courte distance avec ce dernier, ledit équipement à distance (1) peut fonctionner pour transmettre une demande de données audit dispositif mobile (2) par l'intermédiaire de la liaison de communication sans fil à courte distance, et ledit dispositif mobile (2) transmet les données d'installation audit équipement à distance (1) en réponse à la demande de données reçue de ce dernier.

4. Procédé d'installation de données mis en oeuvre par un système qui comporte un équipement à distance (1) pourvu d'un code d'identification unique, un serveur de gestion d'équipement (3) situé à distance par rapport à l'équipement à distance (1) et un dispositif mobile (2), ledit procédé comprenant les étapes consistant à:
a) acquérir, par le dispositif mobile (2), le code d'identification unique de l'équipement à distance (1);
b) à l'établissement d'une liaison de communication entre le dispositif mobile (2) et le serveur de gestion d'équipement (3), transmettre, par le dispositif mobile (2), une demande d'installation qui comporte le code d'identification unique au serveur de gestion d'équipement (3);
c) à la réception de la demande d'installation du dispositif mobile (2), transmettre, par le serveur de gestion d'équipement (3), au dispositif mobile (2) les données d'installation qui y sont pré-mémorisées, qui correspondent au code d'identification unique et qui sont associées à l'installation de données de l'équipement à distance (1); et
d) à l'établissement d'une liaison de communication sans fil à courte distance entre le dispositif mobile (2) et l'équipement à distance (1), transmettre, par le dispositif mobile (2), les données d'installation à l'équipement à distance (1) de sorte que l'équipement à distance (1) effectue l'installation initiale des données d'installation,
**caractérisé par le fait que** les données d'installation comportent les données de connexion qui sont associées à la connexion entre l'équipement à distance (1) et le serveur de gestion d'équipement (3), et les données de paramètre et les données de progiciel qui sont associées au fonctionnement de l'équipement à distance (1),
dans lequel le procédé est par ailleurs **caractérisé par** les étapes consistant à:
e) lorsque l'installation des données d'installation est réussie, transmettre, par l'équipement à distance (1), une notification qui indique que l'installation des données est réussie au dispositif mobile (2) par l'intermédiaire de la liaison de communication sans fil à courte distance;
f) établir, par l'équipement à distance (1), la liaison de communication avec le serveur de gestion d'équipement (3) par l'intermédiaire du réseau de communication (100) sur base des données de connexion des données d'installation, et transmettre un signal de redémarrage au serveur de gestion d'équipement (3) après redémarrage sur base des données de paramètre et des données de progiciel des données d'installation;
g) à la réception de la notification transmise par l'équipement à distance (1) à l'étape e), obtenir, par le dispositif mobile (2), les données de positionnement qui sont associées à l'équipement à distance (1) à l'aide de la technologie du système de positionnement global (GPS), et transmettre au serveur de gestion d'équipement (3) une réponse d'installation qui comporte les données de positionnement et le code d'identification unique de l'équipement à distance (1); et
h) à la réception du signal de redémarrage transmis par l'équipement à distance (1) à l'étape f) et de la réponse d'installation transmise par le dispositif mobile (2) à l'étape g), mettre à jour, par le serveur de gestion d'équipement (3), un emplacement géographique de l'équipement à distance (1) par les données de positionnement, et transmettre un message de confirmation d'installation au dispositif mobile (2).

5. Procédé selon la revendication 4, le code d'identification unique se présentant sous forme d'un modèle de code-barres bidimensionnel disposé sur l'équipement à distance (1), ledit procédé étant **caractérisé par le fait que** l'étape a) comporte les sous-étapes consistant à:
a1) capturer, par le dispositif mobile (2), une image du modèle de code-barres bidimensionnel; et
a2) traiter, par le dispositif mobile (2), l'image capturée de manière à. obtenir le code d'identification unique.

6. Procédé selon l'une quelconque des revendications 4 et 5, **caractérisé par le fait que**, à l'étape d), l'équipement à distance (1) transmet tout d'abord une demande de données au dispositif mobile (2) par l'intermédiaire de la liaison de communication sans fil à courte distance, et le dispositif mobile (2) transmet les données d'installation à l'équipement à distance (1) en réponse à la demande de données de l'équipement à distance (1).
